(19) Europäisches Patentamt
European Patent Office
Office européen des brevets

(11) **EP 4 697 549 A1**

(12) **EUROPEAN PATENT APPLICATION**
published in accordance with Art. 153(4) EPC

(43) Date of publication:
**18.02.2026   Bulletin 2026/08**

(21) Application number: **24844758.3**

(22) Date of filing: **22.07.2024**

(51) International Patent Classification (IPC):
**H02J 7/00** (2026.01)

(52) Cooperative Patent Classification (CPC):
**H01M 10/44; H02J 7/00; H02J 7/02; H02J 7/34**

(86) International application number:
**PCT/CN2024/106749**

(87) International publication number:
**WO 2025/021067 (30.01.2025 Gazette 2025/05)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **26.07.2023   CN 202310928634**

(71) Applicant: **Ronovo (Shanghai) Medical Science
and
Technology Ltd.
Shanghai 201102 (CN)**

(72) Inventors:
• **YANG, Wen**
  **Shanghai 201102 (CN)**
• **ZHOU, Jun**
  **Shanghai 201102 (CN)**

(74) Representative: **Murgitroyd & Company
165-169 Scotland Street
Glasgow G5 8PL (GB)**

(54) **BATTERY CHARGING MANAGEMENT METHOD AND APPARATUS, AND SURGICAL ROBOT, DEVICE AND MEDIUM**

(57)    Disclosed in the present application are a battery charging management method and apparatus, and a surgical robot, a device and a medium. The method comprises: when power is supplied to a plurality of surgical platforms on the basis of an integrated central device and a standby battery corresponding to each surgical platform is charged, determining an available output power of the integrated central device with respect to a plurality of standby batteries at the current moment (S110); determining a state-of-charge calibration value corresponding to each standby battery at the current moment (S120); and on the basis of the state-of-charge calibration value corresponding to each standby battery and the available output power of the integrated central device with respect to the plurality of standby batteries, determining a charging power corresponding to each standby battery at the current moment, and on the basis of each charging power, charging the corresponding standby battery at the current moment (S130).

FIG. 1

## Description

The application claims priority to the Chinese patent application No. 202310928634.2 filed with China National Intellectual Property Administration on July 26, 2023, which is hereby incorporated by reference in its entirety.

## TECHNICAL FIELD

The present invention relates to the technology field of medical apparatus, for example, to a battery charging management method and apparatus, a surgical robot, a device and a medium.

## BACKGROUND

In the course of modern society, robots are gradually transforming human production methods and lifestyles, improving production efficiency and product quality in various industries. As high-end, intelligent medical apparatus products, surgical robots can perform operations by remotely operating medical systems, and have unique advantages in assisting surgical prevention, diagnosis, treatment, rehabilitation and other fields, and have huge development potential.

However, in the related art, the integration hub is generally powered by the grid power supply, and then the surgical robot is powered based on the integration hub, so that the surgical robot can operate normally. This method may cause the surgical robot to stop working immediately when the grid power supply is cut off during the operation of the surgical robot, thus affecting a normal operation of the surgical robot, and even causing medical accidents.

## SUMMARY

The present invention provides a battery charging management method and an apparatus, a surgical robot, a device and a medium, which can achieve charging balance for backup batteries corresponding to multiple surgical platforms, ensuring that multiple surgical platforms can be evacuated simultaneously during operation, thereby ensuring a normal operation of a split-type surgical robot.

According to a first aspect of the present invention, a battery charging management method is provided, and the method includes:

determining an available output power of an integration hub device for multiple backup batteries at a current time point, when the integration hub device is configured to supply power to multiple surgical platforms and charge a backup battery corresponding to each surgical platform;
determining a remaining capacity calibration value of each backup battery at the current time point; and

determining a charging power for each backup battery at the current time point based on the remaining capacity calibration value of each backup battery and the available output power of the integration hub device for the multiple backup batteries, and charging each backup battery based on the charging power for each backup battery at the current time point.

According to a second aspect of the present invention, a battery charge management apparatus is provided, and the apparatus includes:

an available output power determination module configured to determine an available output power of an integration hub device for multiple backup batteries at a current time point, when the integration hub device is configured to supply power to multiple surgical platforms and charge a backup battery corresponding to each surgical platform;
a remaining capacity calibration value determination module configured to determine a remaining capacity calibration value of each backup battery at the current time point; and
a charging power determination module configured to determine a charging power for each backup battery at the current time point based on the remaining capacity calibration value of each backup battery and the available output power of the integration hub device for the multiple backup batteries, and charge each backup battery based on the charging power for each backup battery at the current time point.

According to a third aspect of the present invention, a surgical robot is provided, and a surgical robot includes:
a console, an integration hub device, an isolation transformer, a grid power supply, a plurality of surgical platforms and a backup battery corresponding to each surgical platform. The integration hub device is connected to the console and the plurality of surgical platforms respectively through communication; the integration hub device is electrically connected to a plurality of backup batteries; and each backup battery includes a charge-discharge management unit (CDMU).

According to a fourth aspect of the present invention, an electronic device is provided, and the electronic device includes:

at least one processor; and
a memory connected to the at least one processor through communication.

The memory has a computer program executable by the at least one processor stored thereon, and the computer program, when executed by the at least one processor, causes the at least one processor to perform any one of the battery charging management methods of the embodiments of the invention.

According to a fifth aspect of the present invention, a computer-readable storage medium is provided. The computer-readable storage medium has computer instructions stored thereon, and the computer instructions, when executed by a processor, causes the processor to perform any one of the battery charging management methods of the embodiments of the invention.

BRIEF DESCRIPTION OF THE DRAWINGS

FIG. 1 is a flow chart of a battery charging management method according to an embodiment of the present invention;

FIG. 2 is a schematic view showing a backup battery working mode under a working condition according to an embodiment of the present invention;

FIG. 3 is a schematic view showing a backup battery working mode under another working condition according to an embodiment of the present invention;

FIG. 4 is a schematic view showing a backup battery working mode under still another working condition according to an embodiment of the present invention;

FIG. 5 is a flow chart of another battery charging management method according to an embodiment of the present invention;

FIG. 6 is a schematic view showing a structure of a battery charge management apparatus according to an embodiment of the present invention;

FIG. 7 is a schematic view showing a structure of a surgical robot according to an embodiment of the present invention;

FIG. 8 is a schematic view showing a structure of an electronic device implementing the battery charging management method according to an embodiment of the present invention.

DETAILED DESCRIPTION OF THE EMBODIMENTS

It should be noted that the terms "first", "second", etc. in the specification, claims and the above-mentioned drawings of the present application are used to distinguish similar objects, and are not necessarily used to describe a specific order or sequence. It should be understood that the data used in this way may be interchangeable where appropriate, so that the embodiments of the present invention described herein can be implemented in an order other than those illustrated or described herein. In addition, the terms "include" and "have" and any variations thereof are intended to cover non-exclusive inclusions, for example, a process, method, system, product or device including a series of steps or units is not necessarily limited to those steps or units clearly listed, but may include other steps or units that are not clearly listed or that are inherent to these processes, methods, products or devices.

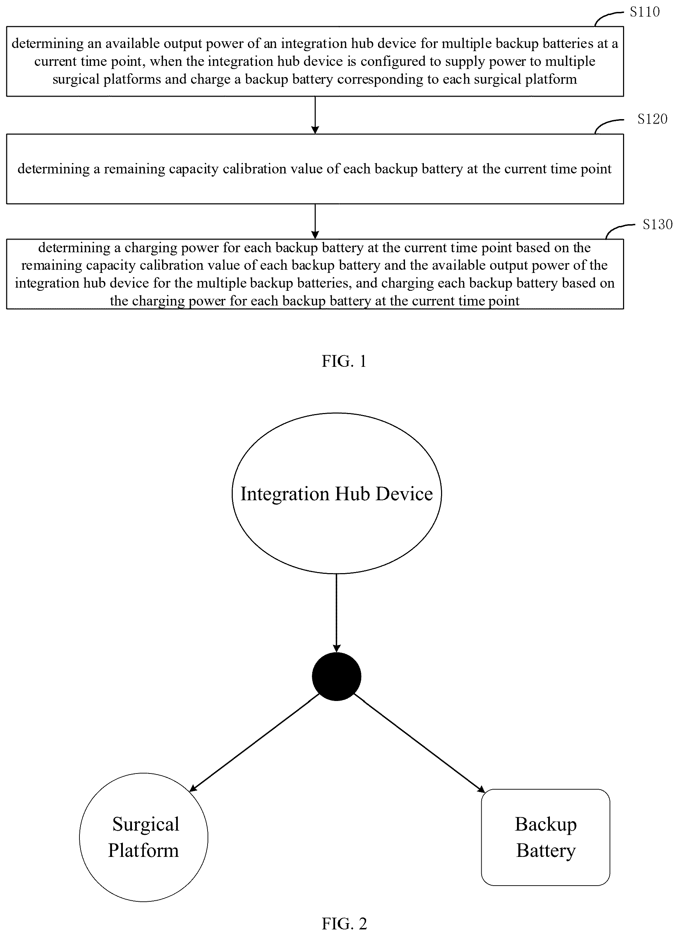

FIG. 1 is a flow chart of a battery charge management method provided by an embodiment of the present invention. This embodiment is applicable to a case that an integration hub device is configured to supply power to multiple surgical platforms and charge the backup battery corresponding to each surgical platform. The method can be executed by a battery charge management apparatus, which may be implemented in the form of hardware and/or software and may be configured in a terminal and/or in a server. As shown in FIG. 1, the method includes:

S110, an available output power of an integration hub device for multiple backup batteries at a current time point is determined, when the integration hub device is configured to supply power to multiple surgical platforms and charge a backup battery corresponding to each surgical platform.

It should be noted that the technical solution provided in this embodiment can be applied to a split-type surgical robot. The split-type surgical robot may include a console, an integration hub device, and a surgical platform. A set of split-type surgical robot may include multiple surgical platforms, and for each surgical platform, a backup battery associated with the surgical platform is also included.

The console, as an overall control center, can have functions such as data acquisition, operation processing and control output. In an actual application, information of the integration hub device and surgical platforms is collected, after the collected information is processed according to a preset algorithm, control instructions are outputted to complete a control for the integration hub device and surgical platforms.

The integration hub device can be a device configured to obtain data and output control instructions. The integration hub device can serve as a data integration center and a output control unit of a power supply, and can collect data from surgical platforms and send instructions from the console through communication cables, while supplying power to the multiple surgical platforms through power cables.

The surgical platform can be a manipulating component of the surgical robot, and has main functions of adjusting a posture of an instrument, or controlling the instrument and a laparoscope to move. The upper portion of the surgical platform is a robotic arm, and the lower portion thereof includes a power center and a user interaction panel. The surgical platform interacts with the integration hub device and the console respectively through communication cables. The power input of the surgical platform is primarily supplied by the integration hub device. Each surgical platform includes a backup battery (for example, a lithium battery). During an operation, when the grid power supply is cut off, the integration hub device cannot supply power to the surgical platform. At this time, the corresponding surgical platform can be powered based on the backup battery, thereby ensuring a safe evacuation of the surgical platform.

In an actual application, a surgical platform can be powered by the integration hub device, and can also be powered by a corresponding backup battery associated with the surgical platform. In addition, each backup battery can be charged by the integration hub device. Exemplarily, FIG. 2 is a schematic view showing directions of currents flowing between the integration hub device, the surgical platform and the backup battery under the above working condition.

In an embodiment, the available output power may be a charging power of the integration hub device for charging the backup battery. In an actual application, since the integration hub device can both supply power to the surgical platform and charge the backup battery, the available output power of the integration hub device for the backup batteries may be determined according to a total output power of the integration hub device and a supplied power of the integration hub device for the surgical platform.

In an actual application, the integration hub device can only supply power to the multiple surgical platforms, or only charge the multiple backup batteries, or can charge the multiple backup batteries while supplying power to the multiple surgical platforms. When the integration hub device is configured to supply power to the multiple surgical platforms and charge the backup battery corresponding to each surgical platform, the available output power of the integration hub device for the multiple backup batteries at the current time point can be determined based on the total output power of the integration hub device and the supplied power of the integration hub device for the multiple surgical platforms at the current time point.

Exemplarily, determining the available output power of the integration hub device for the multiple backup batteries at the current time point includes: obtaining a rated output power of the integration hub device; obtaining a supply output power of the integration hub device for the multiple surgical platforms at the current time point; determining a power difference between the rated output power and the supply output power, and using the power difference as the available output power of the integration hub device for the multiple backup batteries at the current time point.

The rated output power can be the maximum output power that the device can achieve under normal conditions. The rated output power can be one of the parameters that characterize the maximum output capacity of the device. Generally, the rated output power of any device is a nominal value, and can be obtained according to parameter configuration information of the device. The supply output power can be the output power of the integration hub device when the integration hub device supplies power to the multiple surgical platforms. In an actual application, when the integration hub device supplies power to the multiple surgical platforms, corresponding power supply process data is sent from each surgical platform to the integration hub device, so that the integration hub device can perform a data analysis on the power supply process of the surgical platform. When the integration hub device receives the power supply process data sent from each surgical platform, the supply output power of the integration hub device for the multiple surgical platforms at the current time point can be determined based on the received power supply process data.

The power difference may be a difference between the rated output power and the supply output power.

In an actual application, when the integration hub device is configured to supply power to the multiple surgical platforms and charge the backup battery corresponding to each surgical platform, the rated output power of the integration hub device can be obtained first. According to the power supply process data corresponding to the multiple surgical platforms, the supply output power of the integration hub device for the multiple surgical platforms at the current time point is obtained. The power difference between the rated output power and the supply output power is determined, and the power difference is used as the available output power of the integration hub device for the multiple backup batteries at the current time point.

S120, a remaining capacity calibration value of each backup battery at the current time point is determined.

In an embodiment, the remaining capacity calibration value can be obtained after performing a calibration on a remaining capacity value of the backup battery. In general, the remaining capacity value of the battery can be obtained by measuring and calculating the battery capacity through the battery management system (BMS). The conventional method for measuring the battery capacity used in the BMS is to integrate the charge and discharge current over time. The current during a conventional constant current charging is constant, and the calibration can be performed based on the constant current point to improve accuracy. However, during a dynamic charging, it is difficult for the BMS to accurately measure the current across the full measurement range, and the accuracy of the measurement of the battery charging current cannot be guaranteed, and the battery capacity value determined by the BMS may be either lower or higher. Therefore, it is necessary to calibrate the battery capacity value of the backup battery.

In an actual application, for each backup battery, the remaining capacity can be measured first by the BMS in the backup battery to obtain the remaining capacity detection value of the corresponding backup battery. Then, the remaining capacity detection value is calibrated to obtain the remaining capacity calibration value of the corresponding backup battery at the current time point.

S130, a charging power for each backup battery at the current time point is determined based on the remaining capacity calibration value of each backup battery and the available output power of the integration hub device for the multiple backup batteries, and each backup battery is charged based on the charging power for each backup battery at the current time point.

In an embodiment, the available output power corresponds to the multiple backup batteries, that is, the available output power is a sum of the charging powers for the multiple backup batteries. However, the charging power corresponds to a single backup battery, that is, the charging powers for the backup batteries can be different or the same, and the charging powers for the multiple backup batteries are added together to obtain the available output power.

In an actual application, after determining the available output power of the integration hub device for the multiple backup batteries and after determining the remaining capacity calibration value of each backup battery, the available output power of the integration hub device can be allocated according to the remaining capacity calibration value of each backup battery. The charging power for each backup battery at the current time point is determined, and the integration hub device is controlled to charge each backup battery according to the charging power for each backup battery at the current time point.

Exemplarily, determining the charging power for each backup battery at the current time point based on the remaining capacity calibration value of each backup battery and the available output power of the integration hub device for the multiple backup batteries, includes: obtaining, for each backup battery, a total capacity of the backup battery, and subtracting the remaining capacity calibration value of the backup battery at the current time point from the total capacity to obtain a required charge quantity for the backup battery at the current time point; adding the required charge quantities for all backup batteries at the current time point to obtain a total required charge quantity; determining, for each backup battery, a ratio of the required charge quantity at the current time point to the total required charge quantity to obtain a required-charge-quantity ratio, and multiplying the required-charge-quantity ratio by the available output power to obtain the charging power for each backup battery at the current time point.

In an embodiment, the total capacity refers to the battery capacity of the backup battery when the backup battery is initially fully charged. The total capacity of the backup battery can be a nominal parameter of the backup battery. The required charge quantity can be the capacity value required by the backup battery to reach the total capacity. The required charge quantity can also be understood as a difference between the total capacity and the remaining capacity calibration value of the backup battery.

In an actual application, after determining the remaining capacity calibration value of each backup battery at the current time point, for each backup battery, the total capacity of the backup battery is obtained, and the remaining capacity calibration value of the backup battery at the current time point is subtracted from the total capacity to obtain the required charge quantity for the backup battery at the current time point. The required charge quantities for all backup batteries at the current time point are added to obtain the total required charge quantity for the multiple backup batteries. For each backup battery, the ratio of the required charge quantity for the backup battery at the current time point to the determined total required charge quantity is determined to obtain the required-charge-quantity ratio for the backup battery. The required-charge-quantity ratio is multiplied by the available output power of the integration hub device for the multiple backup batteries to obtain the charging power for the backup battery at the current time point.

Exemplarily, assume that the quantity of the backup batteries charged based on the integration hub device is 4, namely a first backup battery, a second backup battery, a third backup battery, and a fourth backup battery. $B_1$ denotes the remaining capacity calibration value of the first backup battery at the current time point, $B_2$ denotes the remaining capacity calibration value of the second backup battery at the current time point, $B_3$ denotes the remaining capacity calibration value of the third backup battery at the current time point, and $B_4$ denotes the remaining capacity calibration value of the fourth backup battery at the current time point. $B_t$ denotes the total capacity of each of the four backup batteries. $P_r$ denotes the available output power of the integration hub device for the four backup batteries. The charging power for each backup battery at the current time point is determined based on the following formulas.

The required charge quantity of each backup battery at the current time point can be:

$$B_{1r} = B_t - B_1$$

$$B_{2r} = B_t - B_2$$

$$B_{3r} = B_t - B_3$$

$$B_{4r} = B_t - B_4$$

where, $B_{1r}$ represents the required charge quantity for the first backup battery at the current time point, $B_{2r}$ represents the required charge quantity for the second backup battery at the current time point; $B_{3r}$ represents the required charge quantity for the third backup battery at the current time point; and $B_{4r}$ represents the required charge quantity for the fourth backup battery at the current time point.

Exemplarily, the charging power for each backup battery at the current time point can be:

$$P_1 = \frac{B_{1r}}{B_{1r} + B_{2r} + B_{3r} + B_{4r}} \times P_r$$

$$P_2 = \frac{B_{2r}}{B_{1r} + B_{2r} + B_{3r} + B_{4r}} \times P_r$$

$$P_3 = \frac{B_{3r}}{B_{1r} + B_{2r} + B_{3r} + B_{4r}} \times P_r$$

$$P_4 = \frac{B_{4r}}{B_{1r} + B_{2r} + B_{3r} + B_{4r}} \times P_r$$

where, $P_1$ represents the charging power for the first backup battery at the current time point, $P_2$ represents the charging power for the second backup battery at the current time point, $P_3$ represents the charging power for the third backup battery at the current time point, and $P_4$ represents the charging power for the fourth backup battery at the current time point.

It should be noted that, when the multiple backup batteries are charged based on the integration hub device, the technical solutions of the embodiments of the present invention can achieve charging balance for the backup batteries corresponding to the multiple surgical platforms, that is, the charging power of a backup battery with less remaining capacity is high and the charging speed is faster, and the charging power of a backup battery with more remaining capacity is low and the charging speed is slower. Finally, the capacities of the backup batteries corresponding to the multiple surgical platforms are balanced.

In an actual application, when the integration hub device is configured to supply power to the multiple surgical platforms so that the surgical platforms can operate normally, there may be a case where the operating power of any one of the surgical platforms is too large, causing the total operating power of the multiple surgical platforms to exceed the rated output power of the integration hub device. In this case, the power supply of the integration hub device for the surgical platforms cannot satisfy the normal operation of the surgical platforms. Therefore, the backup battery corresponding to each surgical platform can be used as a supplementary power supply device, so that each surgical platform can resume a normal operation when simultaneously powered by the integration hub device and backup battery.

In view of this, on the basis of the above technical solution, following steps are further included: determining at least one surgical platform as a target surgical platform when a direct-current (DC) voltage of the at least one surgical platform is detected to be less than a preset voltage threshold; switching each backup battery corresponding to each target surgical platform from a charging mode to a discharging mode, so that a corresponding backup battery can supply power to the corresponding target surgical platform.

It should be noted that, in order to ensure the safety of the integration hub device, and surgical platforms connected to the integration hub device and corresponding backup batteries thereto, an isolation transformer can be arranged between the integration hub device and the grid power supply. It should also be noted that, the benefits of arranging the isolation transformer between the integration hub device and the grid power supply includes: ensuring the usage safety; in addition, since the output efficiency of the isolation transformer is related to the output power of the load, by adjusting and setting the supplied power of the integration hub device for each surgical platform during the surgical operation, the output efficiency of the isolation transformer can be optimized, thereby reducing a generation rate of reactive power and saving more energy.

In an embodiment, the preset voltage threshold may be a preset voltage limit value used to determine whether the operating power of the surgical platform is within an average range.

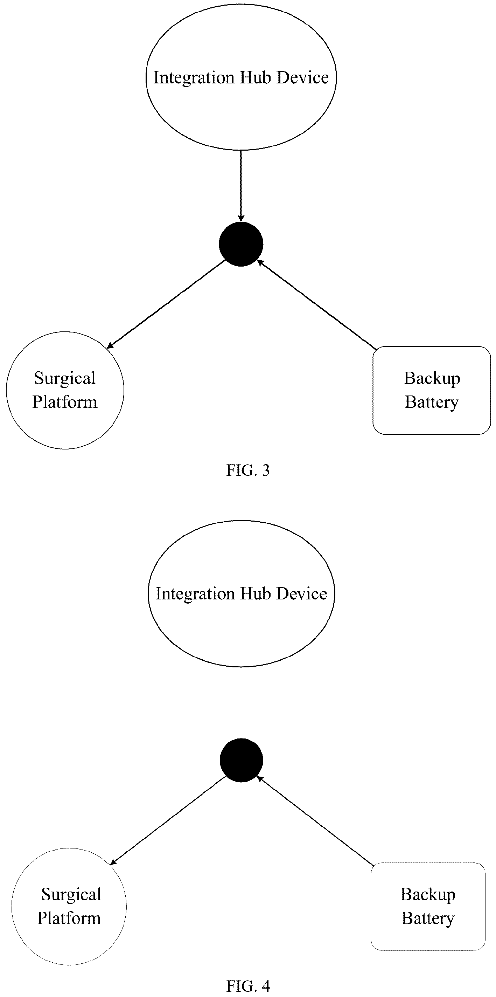

In an actual application, when it is detected that the DC voltage of at least one surgical platform is lower than the preset voltage threshold, it indicates that the operating power of the surgical platform exceeds the rated output power of the integration hub device, and the surgical platform cannot work normally by relying solely on the integration hub device to supply power to the surgical platform. In this case, the surgical platform with the DC voltage lower than the preset voltage threshold can be regarded as the target surgical platform. The backup battery corresponding to each target surgical platform is switched from the charging mode to the discharging mode so that the backup battery supplies power to the corresponding target surgical platform. Exemplarily, FIG. 3 is a schematic view showing directions of currents flowing between the integration hub device, the target surgical platform and the backup battery under the above working conditions.

It should be noted that, when it is detected that the DC voltage of at least one surgical platform is less than the preset voltage threshold, the DC voltage of the surgical platform can be adjusted based on the integration hub device first. When the DC voltage of the surgical platform cannot be adjusted to be greater than the preset voltage threshold by the integration hub device, the corresponding backup battery can be used to supply power to the surgical platform.

It should also be noted that, when it is detected that the operating power of at least one surgical platform is reduced, the charging power for the backup battery corresponding to the surgical platform can be adjusted to achieve fast charging of the backup battery.

In an actual application, when the integration hub device is supplying power to multiple surgical platforms and charging the backup battery corresponding to each surgical platform, there may be a case where the integration hub device is powered off. In this case, the surgical platforms can be powered based on the backup battery corresponding to each surgical platform to ensure the safe evacuation of the surgical platforms.

In view of this, on the basis of the above technical solution, the following step is further included: when the integration hub device is in a power-off state, the backup battery corresponding to each surgical platform is switched from the charging mode to the discharging mode, so that each backup battery supplies power to the corresponding surgical platform.

In an embodiment, the integration hub device is in the power-off state, which can be understood as the integration hub device cannot supply power to any surgical platform and cannot charge any backup battery. In the charging mode, the backup battery can be charged by connecting to the integration hub device. In the discharging mode, the power of the backup battery can be consumed by connecting to a power-consuming device.

In an actual application, when the integration hub device is supplying power to the multiple surgical platforms and charging the backup battery corresponding to each surgical platform, in the case that the integration hub device is in a power-off state, the integration hub device cannot supply power to any surgical platform. To ensure that the surgical platform is always in normal working condition, the backup battery corresponding to each surgical platform can be switched from the charging mode to the discharging mode. The backup battery corresponding to each surgical platform supplies power to the corresponding surgical platform. Exemplarily, FIG. 4 is a schematic view showing directions of currents flowing between the integration hub device, the surgical platform and the backup battery under the above working conditions.

The technical solutions of the embodiments of the present invention includes determining the available output power of the integration hub device for the multiple backup batteries at the current time point, when the integration hub device is configured to supply power to the multiple surgical platforms and charge the backup battery corresponding to each surgical platform, then determining the remaining capacity calibration value of each backup battery at the current time point, and finally determining the charging power for each backup battery at the current time point based on the remaining capacity calibration value of each backup battery and the available output power of the integration hub device for the multiple backup batteries, and charging each backup battery based on the charging power for each backup battery at the current time point, thereby avoiding the situation in the related art that the normal operation of the surgical robot is affected for the reason that the surgical robot stops working immediately in the event that the grid power supply is cut off during the operation of the surgical robot, and achieving charging balance for the backup batteries corresponding to the multiple surgical platforms. Further, it is ensured that the multiple surgical platforms can be evacuated at the same time during the operation, thereby ensuring the normal operation of the split-type surgical robot.

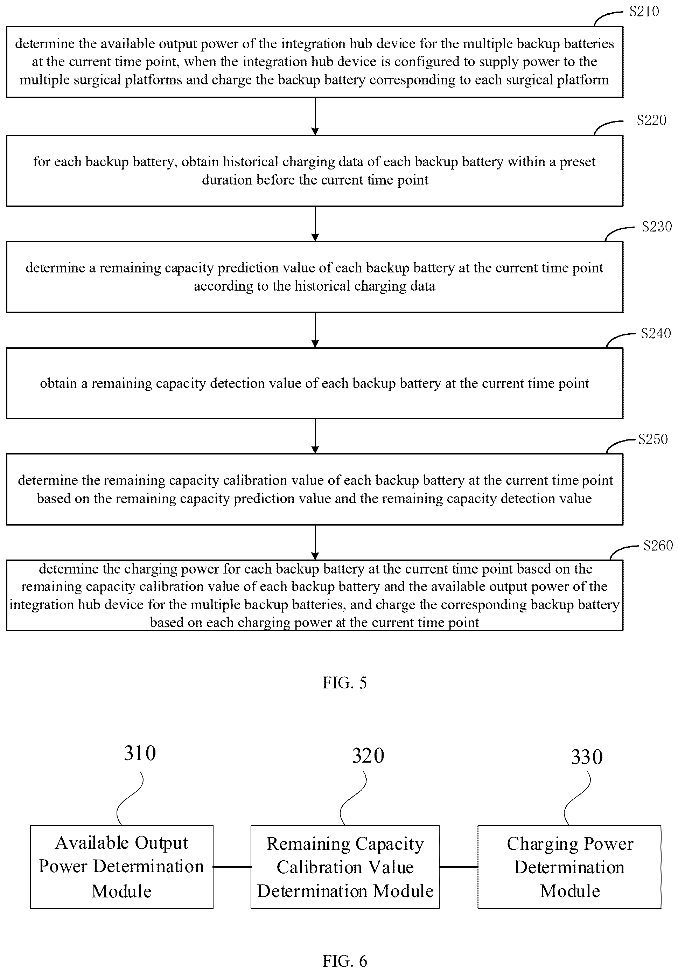

FIG. 5 is a flow chart of another battery charging management method according to an embodiment of the present invention, which shows Step S120 in detail based on the above embodiments. The same or corresponding technical terms that are described in the above embodiments are not described repeatedly herein.

As shown in FIG. 5, the method includes:

S210, the available output power of the integration hub device for the multiple backup batteries at the current time point is determined, when the integration hub device is configured to supply power to the multiple surgical platforms and charge the backup battery corresponding to each surgical platform.

S220, for each backup battery, historical charging data of each backup battery within a preset duration before the current time point is obtained.

It should be noted that, in the case that the multiple backup batteries are charged based on the integration hub device and the remaining capacity calibration value of each backup battery is determined, for each backup battery, the process of determining the remaining capacity calibration value of each backup battery is the same. Therefore, the process of determining the remaining capacity calibration value can be described by taking one of the backup batteries as an example.

In an embodiment, the preset duration can be understood as a predetermined time range for limiting a time period for collecting historical charging data. The preset duration can be any duration, for example, 10 minutes, 20 minutes, or 30 minutes. The historical charging data can be data that characterizes the charging status of the backup battery. The historical charging data can include a charging current, a charging voltage, and/or a charging power, etc.

In an actual application, for each backup battery charged based on the integration hub device, in order to analyze the charging status of the backup battery, and calibrate the remaining capacity detection value of the backup battery at the current time point based on an analysis result, the historical charging data of the backup battery within the preset duration before the current time point is obtained. The charging status of the backup battery is analyzed based on the obtained historical charging data.

S230, a remaining capacity prediction value of each backup battery at the current time point is determined according to the historical charging data.

In an embodiment, the remaining capacity prediction value may be a capacity detection value calculated based on the historical charging data.

In an actual application, since the process of the integration hub device charging the backup battery is a dynamic charging process, the charging power can be dynamically adjusted by units of time point during the charging process. Therefore, when the charging data of the backup battery at the current time point is determined, a data analysis can be performed based on the charging data of the backup battery at the historical charging time points.

In an actual application, when the historical charging data of the backup battery is obtained, an analysis can be performed on the historical charging data. Based on the historical charging data, the real historical remaining capacity value of the backup battery at any historical charging time point is determined, and the remaining capacity detection value of the current time point is determined according to the determined multiple real historical remaining capacity values.

Exemplarily, determining the remaining capacity prediction value of the backup battery at the current time point according to the historical charging data includes: determining multiple historical time points before the current time point and historical remaining capacity values corresponding to the multiple historical time points according to the historical charging data; determining a first remaining capacity prediction value of each backup battery at the current time point according to the multiple historical time points and the historical remaining capacity value corresponding to each historical time point; determining a historical charging power and a historical remaining capacity value corresponding to a previous time point immediately preceding the current time point according to the historical charging data; determining a second remaining capacity prediction value of each backup battery at the current time point based on the current time point, the previous time point, the historical charging power and the historical remaining capacity value; and determining the remaining capacity prediction value of each backup battery at the current time point based on the first remaining capacity prediction value and the second remaining capacity prediction value.

In an embodiment, the historical charging time point may be any charging time point before the current time point. For example, the historical charging time point may be a previous time point immediately preceding the current time point or a time point immediately preceding the previous time point. Exemplarily, it is assumed that the historical charging time points included in the historical charging data are ordered chronologically as $t_1$, $t_2$, $t_3$, $t_4$, and $t_5$. Where $t_5$ is the time point closest to the current time point. The previous time point immediately preceding the current time point may be $t_5$, and a time point immediately preceding the previous time point may be $t_4$.

In an embodiment, the historical remaining capacity value may be a remaining capacity calibration value of the backup battery at a corresponding historical time point. The historical remaining capacity value may be a remaining capacity value obtained after calibrating a remaining capacity detection value of the backup battery at the corresponding historical time point.

In an embodiment, the historical charging data of the backup battery can be used to characterize a corresponding relationship between historical charging time point and charging data. In the historical charging data, one historical charging time point and the corresponding charging data can constitute a group of data, so that the historical charging data can include multiple groups of data. The charging data corresponding to each historical charging time point can include at least one of a charging voltage, a charging current, a charging power or a remaining capacity value.

In an actual application, after obtaining the historical charging data of the backup battery, the charging data can be extracted from the historical charging data based on determined multiple historical charging time points, to obtain the historical remaining capacity values corresponding to the multiple historical charging time points. A linear equation is constructed based on the multiple historical charging time points and the corresponding historical remaining capacity values, so as to characterize a linear relationship between historical charging time point and historical remaining capacity value based on the constructed linear equation. The current time point is input into the constructed linear equation to obtain the capacity value corresponding to the current time point, which can be used as the first remaining capacity prediction value of the backup battery at the current time point.

In an embodiment, the historical charging power may be the charging power used when charging the backup battery at the historical charging time point.

In an actual application, after obtaining the historical charging data of the backup battery, the charging data is extracted from the historical charging data based on the previous time point immediately preceding the current time point, to obtain the historical charging power and historical remaining capacity value corresponding to the previous time point immediately preceding the current time point. The second remaining capacity prediction value of the backup battery at the current time point is determined based on the current time point, the previous time point, and the obtained historical charging power and historical remaining capacity value.

Exemplarily, determining the second remaining capacity prediction value of the backup battery at the current time point based on the current time point, the previous time point, the historical charging power and the historical remaining capacity value, includes: calculating a difference between the current time point and the previous time point to obtain a time difference; determining a product of the time difference and the historical charging power to obtain a value to be processed; adding the value to be processed and the historical remaining capacity value to obtain the second remaining capacity prediction value of each backup battery at the current time point.

In an exemplary embodiment, after determining the current time point and the previous time point, and after obtaining the historical charging power and historical remaining capacity value corresponding to the previous time point, first, the previous time point may be subtracted from the current time point to determine a difference between the current time point and the previous time point to obtain the time difference. The determined time difference is multiplied by the historical charging power to determine the product of the time difference and the historical charging power, and the obtained product is used as the value to be processed. The determined value to be processed and the obtained historical remaining capacity value corresponding to the previous time point are added, and the value obtained after the addition is used as the second remaining capacity prediction value of the backup battery at the current time point.

Exemplarily, after obtaining the first remaining capacity prediction value and the second remaining capacity prediction value, a weighted sum of the first remaining capacity prediction value and the second remaining capacity prediction value may be performed to obtain the remaining capacity prediction value of the backup battery at the current time point.

Exemplarily, determining the remaining capacity prediction value of the backup battery at the current time point based on the first remaining capacity prediction value and the second remaining capacity prediction value includes: determining a first weight coefficient corresponding to the first remaining capacity prediction value, and determining a second weight coefficient corresponding to the second remaining capacity prediction value; multiplying the first remaining capacity prediction value by the first weight coefficient to obtain a first capacity value to be aggregated, and multiplying the second remaining capacity prediction value by the second weight coefficient to obtain a second capacity value to be aggregated; and adding the first capacity value to be aggregated and the second capacity value to be aggregated to obtain the remaining capacity prediction value of each backup battery at the current time point.

In an embodiment, the first weight coefficient may be a weight value corresponding to the first remaining capacity prediction value, and the second weight coefficient may be a weight value corresponding to the second remaining capacity prediction value. It should be noted that the sum of the first weight coefficient and the second weight coefficient is 1, and the first weight coefficient and the second weight coefficient may be equal weight values or unequal weight values.

In an actual application, the first weight coefficient corresponding to the first remaining capacity prediction value and the second weight coefficient corresponding to the second remaining capacity prediction value are determined. The first remaining capacity prediction value is multiplied by the first weight coefficient to obtain the first capacity value to be aggregated, and the second remaining capacity prediction value is multiplied by the second weight coefficient to obtain the second capacity value to be aggregated. The first capacity value to be aggregated and the second capacity value to be aggregated are added to obtain the remaining capacity prediction value of the backup battery at the current time point.

Exemplarily, the remaining capacity prediction value of the backup battery at the current time point is determined based on the following formula:

$$B_p = W_1 \times B_{p1} + W_2 \times B_{p2}$$

Where $B_p$ represents the remaining capacity prediction value of the backup battery at the current time point; $W_1$ represents the first weight coefficient; $B_{p1}$ represents the first remaining capacity prediction value of the backup battery at the current time point; $W_2$ represents the second weight coefficient; $B_{p2}$ represents the second remaining capacity prediction value of the backup battery at the current time point.

S240, a remaining capacity detection value of each backup battery at the current time point is obtained.

In an embodiment, the remaining capacity detection value may be a remaining capacity value detected by the BMS in the backup battery.

In an actual application, when charging the backup battery based on the integration hub device, the BMS arranged in the backup battery can detect the charging process of the backup battery in real time or periodically. When the current time point is determined, the remaining capacity value of the backup battery at the current time point is detected by the BMS in the backup battery. The remaining capacity value obtained by the detection is determined as the remaining capacity detection value of the backup battery at the current time point.

S250, the remaining capacity calibration value of each backup battery at the current time point is determined based on the remaining capacity prediction value and the remaining capacity detection value.

In an actual application, after the remaining capacity prediction value and the remaining capacity detection value are obtained, a weighted sum is performed on the remaining capacity prediction value and the remaining capacity detection value to obtain the remaining capacity calibration value of the backup battery at the current time point.

Exemplarily, determining the remaining capacity calibration value of the backup battery at the current time point based on the remaining capacity prediction value and the remaining capacity detection value, includes: determining a third weight coefficient corresponding to the remaining capacity prediction value, and determining a fourth weight coefficient corresponding to the remaining capacity detection value; multiplying the remaining capacity prediction value by the third weight coefficient to obtain a third capacity value to be aggregated, and multiplying the remaining capacity detection value by the fourth weight coefficient to obtain a fourth capacity value to be aggregated; and adding the third capacity value to be aggregated and the fourth capacity value to be aggregated to obtain the remaining capacity calibration value of each backup battery at the current time point.

In an embodiment, the third weight coefficient may be a weight value corresponding to the remaining capacity prediction value, and the fourth weight coefficient may be a weight value corresponding to the remaining capacity detection value. It should be noted that the sum of the third weight coefficient and the fourth weight coefficient is 1, and the third weight coefficient and the fourth weight coefficient may be equal weight values or unequal weight values.

In an actual application, the third weight coefficient corresponding to the remaining capacity prediction value and the second weight coefficient corresponding to the remaining capacity detection value are determined. The remaining capacity prediction value is multiplied by the third weight coefficient to obtain the third capacity value to be aggregated, and the remaining capacity detection value is multiplied by the fourth weight coefficient to obtain the fourth capacity value to be aggregated. The obtained third capacity value to be aggregated and the fourth capacity value to be aggregated are added to obtain the remaining capacity calibration value of the backup battery at the current time point.

Exemplarily, the remaining capacity calibration value of the backup battery at the current time point is determined based on the following formula:

$$B = W_3 \times B_p + W_4 \times B_t$$

Where B represents the remaining capacity calibration value of the backup battery at the current time point; $W_3$ represents the third weight coefficient; $B_p$ represents the remaining capacity prediction value of the backup battery at the current time point; $W_4$ represents the fourth weight coefficient; and Bt represents the remaining capacity detection value of the backup battery at the current time point.

S260, the charging power for each backup battery at the current time point is determined based on the remaining capacity calibration value of each backup battery and the available output power of the integration hub device for the multiple backup batteries, and the corresponding backup battery is charged based on each charging power at the current time point.

The technical solutions of the embodiments of the present invention determine the available output power of the integration hub device for the multiple backup batteries at the current time point, when the integration hub device is configured to supply power to the multiple surgical platforms and charge the backup battery corresponding to each surgical platform, determine the remaining capacity calibration value of each backup battery at the current time point, and finally determine the charging power for each backup battery at the current time point based on the remaining capacity calibration value of each backup battery and the available output power of the integration hub device for the multiple backup batteries, and charge each backup battery based on the charging power for each backup battery at the current time point, thereby avoiding the situation in the related art that the normal operation of the surgical robot is affected for the reason that the surgical robot stops working immediately in the event that the grid power supply is cut off during the operation of the surgical robot, and achieving charging balance for the backup batteries corresponding to the multiple surgical platforms. Further, it is ensured that the multiple surgical platforms have the same evacuation time, thereby avoiding the situation that one of the surgical platforms loses the insufficient power and is then locked before the evacuation is completed.

FIG. 6 is a schematic view showing a structure of a battery charge management apparatus according to an embodiment of the present invention. As shown in FIG. 6, the apparatus includes: an available output power determination module 310, a remaining capacity calibration value determination module 320, and a charging power determination module 330.

The available output power determination module 310 is configured to determine an available output power of an integration hub device for multiple backup batteries at a current time point, when the integration hub device is configured to supply power to multiple surgical platforms and charge a backup battery corresponding to each surgical platform. The remaining capacity calibration value determination module 320 is configured to determine a remaining capacity calibration value of each backup battery at the current time point. The charging power determination module 330 is configured to determine a charging power for each backup battery at the current time point based on the remaining capacity calibration value of each backup battery and the available output power of the integration hub device for the multiple backup batteries, and charge each backup battery based on the charging power for each backup battery at the current time point.

The technical solutions of the embodiments of the present invention determine the available output power of the integration hub device for the multiple backup batteries at the current time point, when the integration hub device is configured to supply power to the multiple surgical platforms and charge the backup battery corresponding to each surgical platform, determine the remaining capacity calibration value of each backup battery at the current time point, and finally determine the charging power for each backup battery at the current time point based on the remaining capacity calibration value of each backup battery and the available output power of the integration hub device for the multiple backup batteries, and charge each backup battery based on the charging power for each backup battery at the current time point, thereby avoiding the situation in the related art that the normal operation of the surgical robot is affected for the reason that the surgical robot stops working immediately in the event that the grid power supply is cut off during the operation of the surgical robot, and achieving charging balance for the backup batteries corresponding to the multiple surgical platforms. Further, it is ensured that the multiple surgical platforms can be evacuated at the same time during the operation, thereby ensuring the normal operation of the split-type surgical robot.

Exemplarily, the available output power determination module 310 includes a rated output power acquisition unit, an actual output power acquisition unit and an available output power determination unit.

The rated output power acquisition unit is configured to obtain a rated output power of the integration hub device.

The actual output power acquisition unit is configured to obtain a supply output power of the integration hub device for the multiple surgical platforms at the current time point.

The available output power determination unit is configured to determine a power difference between the rated output power and the supply output power, and use the power difference as the available output power of the integration hub device for the multiple backup batteries at the current time point.

Exemplarily, the remaining capacity calibration value determination module 320 includes a historical charging data acquisition submodule, a remaining capacity prediction value determination submodule, a remaining capacity detection value determination submodule and a remaining capacity calibration value determination submodule.

For each of the backup batteries, following submodules are configured.

The historical charging data acquisition submodule is configured to obtain historical charging data of each backup battery within a preset duration before the current time point.

The remaining capacity prediction value determination submodule is configured to determine a remaining capacity prediction value of each backup battery at the current time point according to the historical charging data.

The remaining capacity detection value determination submodule is configured to obtain a remaining capacity detection value of each backup battery at the current time point.

The remaining capacity calibration value determination submodule is configured to determine the remaining capacity calibration value of each backup battery at the current time point based on the remaining capacity prediction value and the remaining capacity detection value.

Exemplarily, the remaining capacity prediction value determination submodule includes: a historical remaining capacity value determination unit, a first remaining capacity prediction value determination unit, a historical charging power determination unit, a second remaining capacity value determination unit and a remaining capacity prediction value determination unit.

The historical remaining capacity value determination unit is configured to determine multiple historical time points before the current time point and the historical remaining capacity values corresponding to the multiple historical time points according to the historical charging data.

The first remaining capacity prediction value determination unit is configured to determine a first remaining capacity prediction value of each backup battery at the current time point according to the multiple historical time points and the historical remaining capacity value corresponding to each historical time point.

The historical charging power determination unit is configured to determine a historical charging power and a historical remaining capacity value corresponding to a previous time point immediately preceding the current time point according to the historical charging data.

The second remaining capacity value determination unit is configured to determine a second remaining capacity prediction value of each backup battery at the current time point based on the current time point, the previous time point, the historical charging power and the historical remaining capacity value.

The remaining capacity prediction value determination unit is configured to determine the remaining capacity prediction value of each backup battery at the current time point based on the first remaining capacity prediction value and the second remaining capacity prediction value.

Exemplarily, the second remaining capacity value determination unit includes a time difference determination subunit, a to-be-processed value determination subunit, and a second remaining capacity prediction value determination subunit.

The time difference determination subunit is configured to calculate a difference between the current time point and the previous time point to obtain a time difference.

The to-be-processed value determination subunit is configured to determine a product of the time difference and the historical charging power to obtain a value to be processed.

The second remaining capacity prediction value determination subunit is configured to add the value to be processed and the historical remaining capacity value to obtain the second remaining capacity prediction value of each backup battery at the current time point.

Exemplarily, the remaining capacity prediction value determination unit includes a weight determination subunit, a to-be-aggregated capacity value determination subunit, and a remaining capacity prediction value determination subunit.

The weight determination subunit is configured to determine a first weight coefficient corresponding to the first remaining capacity prediction value, and determine a second weight coefficient corresponding to the second remaining capacity prediction value.

The to-be-aggregated capacity value determination subunit is configured to multiply the first remaining capacity prediction value by the first weight coefficient to obtain a first capacity value to be aggregated, and multiply the second remaining capacity prediction value by the second weight coefficient to obtain a second capacity value to be aggregated.

The remaining capacity prediction value determination subunit is configured to add the first capacity value to be aggregated and the second capacity value to be aggregated to obtain the remaining capacity prediction value of each backup battery at the current time point.

Exemplarily, the remaining capacity calibration value determination submodule includes: a weight determination unit, a to-be-aggregated capacity value determination unit, and a remaining capacity calibration value determination unit.

The weight determination unit is configured to determine a third weight coefficient corresponding to the remaining capacity prediction value, and determine a fourth weight coefficient corresponding to the remaining capacity detection value.

The to-be-aggregated capacity value determination unit is configured to multiply the remaining capacity prediction value by the third weight coefficient to obtain a third capacity value to be aggregated, and multiply the remaining capacity detection value by the fourth weight coefficient to obtain a fourth capacity value to be aggregated.

The remaining capacity calibration value determination unit is configured to add the third capacity value to be aggregated and the fourth capacity value to be aggregated to obtain the remaining capacity calibration value of the backup battery at the current time point.

Exemplarily, the apparatus further includes: a target surgical platform determination module and a charging mode switching module.

The target surgical platform determination module is configured to determine at least one surgical platform as a target surgical platform when it is detected that a DC voltage of the at least one surgical platform is less than a preset voltage threshold.

The charging mode switching module is configured to switch each backup battery corresponding to each target surgical platform from a charging mode to a discharging mode, so that a corresponding backup battery can supply power to the corresponding target surgical platform.

Exemplarily, the apparatus further includes a charging mode switching module.

The charging mode switching module is configured to switch each backup battery corresponding to each surgical platform from the charging mode to the discharging mode when the integration hub device is in a power-off state, so that each backup battery supplies power to the corresponding surgical platform.

Exemplarily, the charging power determination module 330 includes a total capacity calibration value determination unit and a charging power determination unit.

The required charge quantity determination unit is configured to obtain, for each backup battery, a total capacity of the backup battery, and subtract the remaining capacity calibration value of the backup battery at the current time point from the total capacity to obtain a required charge quantity for the backup battery at the current time point.

The required charge quantity adding unit is configured to add the required charge quantities for all backup batteries at the current time point to obtain a total required charge quantity.

The charging power determination unit is configured to determine, for each backup battery, a ratio of the required charge quantity at the current time point to the total required charge quantity to obtain a required-charge-quantity ratio, and multiplying the required-charge-quantity ratio by the available output power to obtain the charging power for each backup battery at the current time point.

The battery charge management apparatus provided in the embodiments of the present invention can execute the battery charge management method provided in any embodiment of the present invention, and has the corresponding functional modules for executing the method and can achieve beneficial effects of the method.

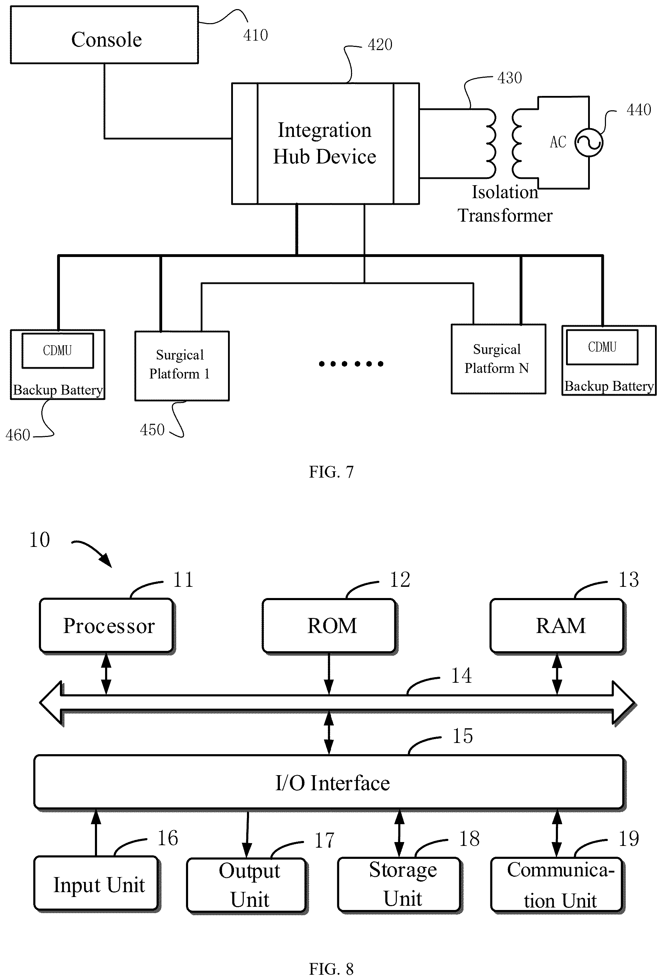

FIG. 7 is a schematic view showing a structure of a surgical robot according to an embodiment of the present invention. As shown in FIG. 7, the surgical robot includes: a console 410, an integration hub device 420, an isolation transformer 430, a grid power supply 440, a plurality of surgical platforms 450, and a backup battery 460 corresponding to each surgical platform. The integration hub device 420 is respectively connected to the console 410 and the plurality of surgical platforms 450 through communication. The integration hub device 420 is electrically connected to the plurality of backup batteries 460. Each backup battery 460 includes a charge-discharge management unit (CDMU). The quantity of the backup batteries 460 can be the same as the quantity of the surgical platforms 450, that is, the backup batteries 460 and the surgical platforms 450 are in a one-to-one correspondence.

In an embodiment, the surgical robot may be a split-type surgical robot. The console 410, as an overall control center, can have functions such as data acquisition, computational processing, and control output. In an actual application, information of the integration hub device 420 and the surgical platforms 450 is collected, after the collected information is processed according to a preset algorithm, control instructions are outputted to complete the control of the integration hub device 420 and the surgical platforms 450. The integration hub device 420 is configured to obtain data and output control instructions, and can serve as a data integration center and a power output control unit of a power supply, and can also collect data from the surgical platforms 450 and send instructions from the console through communication cables, while supplying power to multiple surgical platforms 450 and charging multiple backup batteries 460 through power cables. The isolation transformer 430 is configured to convert a voltage of the grid power supply 440. The grid power supply 440 is configured to supply power to the split-type surgical robot. The surgical platform 450 can be a manipulating component of the split-type surgical robot, and have main functions of providing a support for a robotic arm and a camera arm. The upper portion of the surgical platform 450 is a robotic arm, the lower portion thereof includes a power center and a user interaction panel, and the surgical platform interacts with the integration hub device 420 and the console 410 respectively through communication cables. The backup battery 460 can be used as a backup power source for the surgical platform 450. In the event that the integration hub device 420 is cut off from the power, the surgical platform 450 can be powered based on the backup battery 460. The CDMU included in the backup battery 460 achieves a dynamic and real-time adjustment of the charging mode and the discharging mode through a bidirectional voltage boost and drop conversion circuit.

An embodiment of the present invention provides a surgical robot, which includes: a console, an integration hub device, an isolation transformer, a grid power supply, multiple surgical platforms and a backup battery corresponding to each surgical platform. The integration hub device is respectively connected to the console and the plurality of surgical platforms through communication. The integration hub device is electrically connected to the plurality of backup batteries. The backup battery includes a CDMU, which can avoid the situation in the related art that the normal operation of the surgical robot is affected for the reason that the surgical robot stops working immediately in the event that the grid power supply is cut off during the operation of the surgical robot, and can achieve charging balance for the backup batteries corresponding to the multiple surgical platforms, thereby further ensuring that the multiple surgical platforms can be evacuated at the same time during the operation, and ensuring the normal operation of the split-type surgical robot.

FIG. 8 is a schematic view showing a structure of an electronic device 10 implementing embodiments of the present invention. The electronic device is intended to represent various forms of digital computers, such as a laptop computer, a desktop computer, an operating platform, a personal digital assistant, a server, a blade server, a mainframe computer, and any other suitable computer. The electronic device can also represent various forms of mobile devices, such as a personal digital processor, a cellular phone, a smart phone, a wearable device (such as a helmet, glasses, a watch, etc.) and other similar computing devices. The components, the connections and relationships therebetween, and functions thereof shown herein are merely illustrative and are not intended to limit the implementation of the present invention described and/or required herein.

As shown in FIG. 8, the electronic device 10 includes at least one processor 11, and a memory, such as a read-only memory (ROM) 12, a random access memory (RAM) 13, etc., connected to the at least one processor 11 through communication. A computer program, which can be executed by at least one processor, is stored in the memory. The processor 11 can perform a variety of appropriate actions and processes according to the computer program stored in the ROM 12 or the computer program loaded from the storage unit 18 to the RAM 13. A variety of programs and data required for operations of the electronic device 10 can also be stored in the RAM 13. The processor 11, the ROM 12, and the RAM 13 are connected to each other through a bus 14. An input/output (I/O) interface 15 is also connected to the bus 14.

A number of components in the electronic device 10 are connected to the I/O interface 15, and include: an input unit 16, such as a keyboard, a mouse, etc.; an output unit 17, such as various types of displays, speakers, etc.; a storage unit 18, such as a disk, an optical disk, etc.; and a communication unit 19, such as a network card, a modem, a wireless communication transceiver, etc. The communication unit 19 allows the electronic device 10 to exchange information/data with other devices through a computer network such as the Internet, and/or through various telecommunication networks.

The processor 11 may include a variety of general and/or special processing components having processing and computing abilities. Some examples of the processor 11 include but are not limited to, a central processing unit (CPU), a graphics processing unit (GPU), a variety of special artificial intelligence (AI) computing chips, a variety of processors running machine learning model algorithms, a digital signal processor (DSP), and any appropriate processor, controller, and microcontroller, etc. The processor 11 performs the methods and processes, such as the battery charging management methods described above.

In some embodiments, the battery charging management method may be implemented as a computer program, which is tangibly contained in a computer-readable storage medium, such as a storage unit 18. In some embodiments, part or whole of the computer program may be loaded and/or installed on the electronic device 10 through the ROM 12 and/or a communication unit 19. When the computer program is loaded into the RAM 13 and executed by the processor 11, one or more steps of the battery charging management method described above may be performed. For example, in other embodiments, the processor 11 may be configured to perform the battery charging management method in any other appropriate manner (e.g., by means of firmware).

Various embodiments of the systems and techniques described above can be implemented in a digital electronic circuit system, an integrated circuit system, a field programmable gate array (FPGA), an application specific integrated circuits (ASIC), an application specific standard product (ASSP), a system on chips (SOC), a load programmable logic device (CPLD), a computer hardware, a firmware, a software, and/or combinations thereof. These embodiments may be implemented by one or more computer programs that can be executed and/or interpreted on a programmable system including at least one programmable processor, and the programmable processor can be a dedicated or general-purpose programmable processor that can receive data and instructions from a storage system, at least one input device, and at least one output device, and can transmit data and instructions to the storage system, at least one input device and at least one output device.

The computer program for implementing the methods of the present invention may be written in any combination of one or more programming languages. The computer program may be provided to a processor of a general-purpose computer, special-purpose computer, or any other programmable data processing device, so that when the computer program is executed by the processor, functions/operations specified in the flow charts and/or block diagrams are implemented. The computer program may be executed entirely on the machine, or executed partially on the machine, or as a stand-alone software package, executed partially on the machine and partially on a remote machine, or executed entirely on a remote machine or server.

In the context of the present application, a computer-readable storage medium may be a tangible medium that may contain or store a computer program to be used by or to be used in conjunction with an instruction execution system, apparatus, or device. The computer-readable storage medium may include, but is not limited to, electronic, magnetic, optical, electromagnetic, infrared, or semiconductor systems, apparatus, or devices, or any suitable combination thereof. For example, the computer-readable storage medium may be a machine-readable signal medium. A more specific example of the machine-readable storage medium may include an electrical connection based on one or more lines, a portable computer disk, a hard disk, an RAM, an ROM, an erasable programmable read-only memory (EPROM or flash memory), an optical fiber, a portable compact disk read-only memory (CD-ROM), an optical storage device, a magnetic storage device, or any suitable combination thereof. The computer-readable storage medium may be a non-transitory computer-readable storage medium.

To provide interactions with a user, the systems and techniques described herein may be implemented on an electronic device having: a display device (e.g., a cathode ray tube (CRT) or a liquid crystal display (LCD) monitor) for displaying information to the user, and a keyboard and a pointing device (e.g., a mouse or a trackball) through which the user can send input to the electronic device. Other types of devices may also be used to provide interactions with the user, for example, the feedback provided to the user may be any form of sensory feedback (e.g., visual feedback, auditory feedback, or tactile feedback), and input from the user may be received in any form (including acoustic input, voice input, or tactile input).

The systems and techniques described herein may be implemented in a computing system (e.g., as a data server) that includes backend components, or a computing system (e.g., an application server) that includes middleware components, or a computing system (e.g., a user computer with a graphical user interface or a web browser, through which a user can interact with implementations of the systems and techniques described herein) that includes frontend components, or a computing system that includes any combination of such backend components, middleware components, or frontend components. The components of the system may be interconnected by any form or any medium of digital data communication (e.g., a communication network). Examples of communication networks include: a local area network (LAN), a wide area network (WAN), a blockchain network, and the Internet.

A computing system may include a client and a server. The client and the server are generally remote from each other and usually interact through a communication network. A client and server relationship is generated by running computer programs on the corresponding computers having a client-server relationship with each other. The server may be a cloud server, also known as a cloud computing server or a cloud host, which is a host product in the cloud computing service system, so as to improve the situation that, in the physical hosts and VPS services in related technology, the management difficulty is great and the business scalability is weak.

It should be understood that steps can be reordered, added or deleted based on various forms of processes shown above. For example, the multiple steps recorded in this application can be executed in parallel, sequentially or in different orders, which is not limited herein, as long as the expected effects of the technical solutions of the invention can be achieved.

**Claims**

1. A battery charging management method, **characterized by** comprising:

determining an available output power of an integration hub device for multiple backup batteries at a current time point, when the integration hub device is configured to supply power to multiple surgical platforms and charge a backup battery corresponding to each surgical platform; determining a remaining capacity calibration value of each backup battery at the current time point; and

determining a charging power for each backup battery at the current time point based on the remaining capacity calibration value of each backup battery and the available output power of the integration hub device for the multiple backup batteries, and charging each backup battery based on the charging power for each backup battery at the current time point.

2. The method according to claim 1, wherein determining the available output power of the integration hub device for the multiple backup batteries at the current time point comprises:

   obtaining a rated output power of the integration hub device;
   obtaining a supply output power of the integration hub device for the multiple surgical platforms at the current time point; and
   determining a power difference between the rated output power and the supply output power, and using the power difference as the available output power of the integration hub device for the multiple backup batteries at the current time point.

3. The method according to claim 1, wherein determining the remaining capacity calibration value of each backup battery at the current time point comprises:

   obtaining historical charging data of each backup battery within a preset duration before the current time point;
   determining a remaining capacity prediction value of each backup battery at the current time point according to the historical charging data;
   obtaining a remaining capacity detection value of each backup battery at the current time point; and
   determining the remaining capacity calibration value of each backup battery at the current time point based on the remaining capacity prediction value and the remaining capacity detection value.

4. The method according to claim 3, wherein determining the remaining capacity prediction value of each backup battery at the current time point according to the historical charging data comprises:

   determining multiple historical time points before the current time point and historical remaining capacity values corresponding to the multiple historical time points according to the historical charging data;
   determining a first remaining capacity prediction value of each backup battery at the current time point according to the multiple historical time points and the historical remaining capacity values corresponding to the historical time points;
   determining a historical charging power and a historical remaining capacity value corresponding to a previous time point immediately preceding the current time point according to the historical charging data;
   determining a second remaining capacity prediction value of each backup battery at the current time point based on the current time point, the previous time point, the historical charging power and the historical remaining capacity value; and
   determining the remaining capacity prediction value of each backup battery at the current time point based on the first remaining capacity prediction value and the second remaining capacity prediction value.

5. The method according to claim 4, wherein determining the second remaining capacity prediction value of each backup battery at the current time point based on the current time point, the previous time point, the historical charging power and the historical remaining capacity value, comprises:

   calculating a difference between the current time point and the previous time point to obtain a time difference;
   determining a product of the time difference and the historical charging power to obtain a value to be processed; and
   adding the value to be processed and the historical remaining capacity value to obtain the second remaining capacity prediction value of each backup battery at the current time point.

6. The method according to claim 4, wherein determining the remaining capacity prediction value of each backup battery at the current time point based on the first remaining capacity prediction value and the second remaining capacity prediction value comprises:

   determining a first weight coefficient corresponding to the first remaining capacity prediction value, and determining a second weight coefficient corresponding to the second remaining capacity prediction value;
   multiplying the first remaining capacity prediction value by the first weight coefficient to obtain a first capacity value to be aggregated, and multiplying the second remaining capacity prediction value by the second weight coefficient to obtain a second capacity value to be aggregated; and
   adding the first value to be aggregated and the second value to be aggregated to obtain the remaining capacity prediction value of each backup battery at the current time point.

7. The method according to claim 3, wherein determining the remaining capacity calibration value of each backup battery at the current time point based on the remaining capacity prediction value and the remaining capacity detection value comprises:

    determining a third weight coefficient corresponding to the remaining capacity prediction value, and determining a fourth weight coefficient corresponding to the remaining capacity detection value;
    multiplying the remaining capacity prediction value by the third weight coefficient to obtain a third capacity value to be aggregated, and multiplying the remaining capacity detection value by the fourth weight coefficient to obtain a fourth capacity value to be aggregated; and
    adding the third capacity value to be aggregated and the fourth capacity value to be aggregated to obtain the remaining capacity calibration value of each backup battery at the current time point.

8. The method according to claim 1, further comprising:

    determining at least one surgical platform as a target surgical platform when a direct-current (DC) voltage of the at least one surgical platform is detected to be less than a preset voltage threshold; and
    switching each backup battery corresponding to each target surgical platform from a charging mode to a discharging mode, so that each backup battery supplies power to a corresponding target surgical platform.

9. The method according to claim 1, further comprising: switching each backup battery corresponding to each surgical platform from a charging mode to a discharging mode when the integration hub device is in a power-off state, so that each backup battery supplies power to the corresponding surgical platform.

10. The method according to claim 1, wherein determining a charging power for each backup battery at the current time point based on the remaining capacity calibration value of each backup battery and the available output power of the integration hub device for the multiple backup batteries, comprises:

    obtaining a total capacity of each backup battery, and subtracting the remaining capacity calibration value of each backup battery at the current time point from the total capacity to obtain a required charge quantity for each backup battery at the current time point;
    adding required charge quantities for the multiple backup batteries at the current time point to obtain a total required charge quantity; and
    determining, for each backup battery, a ratio of the required charge quantity at the current time point to the total required charge quantity to obtain a required-charge-quantity ratio, and multiplying the required-charge-quantity ratio by the available output power to obtain the charging power for each backup battery at the current time point.

11. A battery charge management apparatus, **characterized by** comprising:
an available output power determination module configured to determine an available output power of an integration hub device for multiple backup batteries at a current time point, when the integration hub device is configured to supply power to multiple surgical platforms and charge a backup battery corresponding to each surgical platform; a remaining capacity calibration value determination module configured to determine a remaining capacity calibration value of each backup battery at the current time point; and a charging power determination module configured to determine a charging power for each backup battery at the current time point based on the remaining capacity calibration value of each backup battery and the available output power of the integration hub device for the multiple backup batteries, and charge each backup battery based on the charging power for each backup battery at the current time point.

12. A surgical robot, comprising: a console, an integration hub device, an isolation transformer, a grid power supply, a plurality of surgical platforms and a backup battery corresponding to each surgical platform; wherein the integration hub device is connected to the console and the plurality of surgical platforms respectively through communication; the integration hub device is electrically connected to a plurality of backup batteries; and each backup battery comprises a charge-discharge management unit (CDMU).

13. An electronic device, comprising:

    at least one processor; and
    a memory connected to the at least one processor through communication;
    wherein, the memory has a computer program executable by the at least one processor stored thereon, and the computer program, when executed by the at least one processor, causes the at least one processor to perform the battery charging management method according to any one of claims 1 to 10.

14. A computer-readable storage medium, having computer instructions stored thereon, wherein the computer instructions, when executed by a processor, causes the processor to perform the battery charging management method according to any one of claims 1 to 10.

S110

determining an available output power of an integration hub device for multiple backup batteries at a current time point, when the integration hub device is configured to supply power to multiple surgical platforms and charge a backup battery corresponding to each surgical platform

S120

determining a remaining capacity calibration value of each backup battery at the current time point

S130

determining a charging power for each backup battery at the current time point based on the remaining capacity calibration value of each backup battery and the available output power of the integration hub device for the multiple backup batteries, and charging each backup battery based on the charging power for each backup battery at the current time point

FIG. 1

Integration Hub Device

Surgical Platform

Backup Battery

FIG. 2

Integration Hub Device

Surgical
Platform

Backup
Battery

FIG. 3

Integration Hub Device

Surgical
Platform

Backup
Battery

FIG. 4

S210

determine the available output power of the integration hub device for the multiple backup batteries at the current time point, when the integration hub device is configured to supply power to the multiple surgical platforms and charge the backup battery corresponding to each surgical platform

S220

for each backup battery, obtain historical charging data of each backup battery within a preset duration before the current time point

S230

determine a remaining capacity prediction value of each backup battery at the current time point according to the historical charging data

S240

obtain a remaining capacity detection value of each backup battery at the current time point

S250

determine the remaining capacity calibration value of each backup battery at the current time point based on the remaining capacity prediction value and the remaining capacity detection value

S260

determine the charging power for each backup battery at the current time point based on the remaining capacity calibration value of each backup battery and the available output power of the integration hub device for the multiple backup batteries, and charge the corresponding backup battery based on each charging power at the current time point

FIG. 5

310

320

330

| Available Output Power Determination Module | Remaining Capacity Calibration Value Determination Module | Charging Power Determination Module |

FIG. 6

Console — 410

Integration
Hub Device — 420

— 430

Isolation
Transformer

AC — 440

CDMU
Backup Battery

Surgical
Platform 1

· · · · · ·

Surgical
Platform N

CDMU
Backup Battery

460 — 450 —

FIG. 7

10

Processor — 11

ROM — 12

RAM — 13

— 14

— 15

I/O Interface

Input Unit — 16

Output
Unit — 17

Storage
Unit — 18

Communica-
tion Unit — 19

FIG. 8

## INTERNATIONAL SEARCH REPORT

| | International application No. |
|---|---|
| | **PCT/CN2024/106749** |

**A. CLASSIFICATION OF SUBJECT MATTER**

H02J 7/00(2006.01)i

According to International Patent Classification (IPC) or to both national classification and IPC

**B. FIELDS SEARCHED**

Minimum documentation searched (classification system followed by classification symbols)

IPC: H02J

Documentation searched other than minimum documentation to the extent that such documents are included in the fields searched

Electronic data base consulted during the international search (name of data base and, where practicable, search terms used)

CNKI, IEEE, CNTXT, DWPI, ENTXT, ENTXTC: 电池, 充电, 可用功率, 剩余功率, 分配, 预测, 电量, SOC, battery, charge, available, remaining, power, distribution, prediction, electric quantity

**C. DOCUMENTS CONSIDERED TO BE RELEVANT**

| Category* | Citation of document, with indication, where appropriate, of the relevant passages | Relevant to claim No. |
|---|---|---|
| Y | CN 113595195 A (SOUTHERN POWER GRID ELECTRIC VEHICLE SERVICE CO., LTD.) 02 November 2021 (2021-11-02) description, paragraphs 41-123, and figures 1-6 | 1-3, 8-11, 13-14 |
| Y | CN 115426974 A (CMR SURGICAL LIMITED) 02 December 2022 (2022-12-02) description, paragraphs 31-88, and figures 1-6 | 1-3, 8-11, 13-14 |
| Y | CN 115754752 A (GUANGDONG POWER GRID COMPANY et al.) 07 March 2023 (2023-03-07) description, paragraphs 30-45, and figure 1 | 3 |
| X | CN 115426974 A (CMR SURGICAL LIMITED) 02 December 2022 (2022-12-02) description, paragraphs 31-88, and figures 1-6 | 12 |
| A | CN 116359775 A (GUANGZHOU XIAOPENG MOTORS TECHNOLOGY CO., LTD.) 30 June 2023 (2023-06-30) entire document | 1-14 |
| A | US 2013262002 A1 (MCKESSON AUTOMATION INC.) 03 October 2013 (2013-10-03) entire document | 1-14 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **31 October 2024** | **06 November 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/106749**

| Patent document cited in search report | | | Publication date (day/month/year) | Patent family member(s) | | | Publication date (day/month/year) |
|---|---|---|---|---|---|---|---|
| CN | 113595195 | A | 02 November 2021 | None | | | |
| CN | 115426974 | A | 02 December 2022 | JP | 2022533109 | A | 21 July 2022 |
| | | | | JP | 7439130 | B2 | 27 February 2024 |
| | | | | GB | 202006046 | D0 | 10 June 2020 |
| | | | | GB | 2594327 | A | 27 October 2021 |
| | | | | GB | 2594327 | B | 14 August 2024 |
| | | | | WO | 2021214456 | A1 | 28 October 2021 |
| | | | | BR | 112022021444 | A2 | 13 December 2022 |
| | | | | EP | 4138713 | A1 | 01 March 2023 |
| | | | | US | 2023157770 | A1 | 25 May 2023 |
| | | | | JP | 2023182776 | A | 26 December 2023 |
| | | | | AU | 2021261630 | A1 | 17 November 2022 |
| CN | 115754752 | A | 07 March 2023 | None | | | |
| CN | 116359775 | A | 30 June 2023 | None | | | |
| US | 2013262002 | A1 | 03 October 2013 | None | | | |

Form PCT/ISA/210 (patent family annex) (July 2022)